# EUROPÄISCHE PATENTSCHRIFT

(11) **EP 4 098 236 B1**
(45) Veröffentlichungstag und Bekanntmachung des Hinweises auf die Patenterteilung: **21.05.2025**
(21) Anmeldenummer: 21177806.3
(22) Anmeldetag: 04.06.2021
(51) Int. Cl.: A61G 3/06, B60P 1/44

(54) **KRAFTFAHRZEUG MIT PLATTFORMLIFT-SYSTEM ZUM SICHEREN EIN- UND AUSLADEN SOWIE ZUM BEFÖRDERN VON TRANSPORTPERSONEN SOWIE VERFAHREN**
MOTOR VEHICLE WITH PLATFORM LIFT SYSTEM FOR SAFELY LOADING AND UNLOADING AS WELL AS TRANSPORTING PASSENGERS AND METHOD
VÉHICULE AUTOMOBILE POURVU DE SYSTÈME DE PLATE-FORME ÉLÉVATRICE PERMETTANT DE CHARGER ET DE DÉCHARGER, AINSI QUE DE TRANSPORTER DES PERSONNES DE MANIÈRE SÉCURISÉE, AINSI QUE PROCÉDÉ

(43) Veröffentlichungstag der Anmeldung: 07.12.2022
(73) Patentinhaber: Ambulanz Mobile GmbH & Co. KG, 39218 Sachsen-Anhalt Schönebeck (DE)
(72) Erfinder: SCHWARZ, Hans-Jürgen, 39218 Schönebeck (DE); RAULIEN, Volker, 39218 Schönebeck (DE)
(74) Vertreter: Freischem & Partner Patentanwälte mbB

(56) Entgegenhaltungen:
- US-A- 4 664 584
- US-A- 5 308 214
- US-A1- 2007 194 607
- US-A1- 2017 190 298
- US-A1- 2018 312 381

## Beschreibung

Die Erfindung betrifft ein Kraftfahrzeug mit einem Plattformlift-System zum sicheren Ein- und Ausladen sowie zum Befördern von Personen. Insbesondere betrifft die Erfindung ein Kraftfahrzeug in Form eines Rettungstransportwagens, Krankentransportwagens und/oder eines Transportfahrzeuges zur Beförderung von Menschen mit motorischen Einschränkungen. Menschen mit motorischen Einschränkungen werden in der Praxis häufig in einem Transportstuhl sitzend gefahren und auch innerhalb eines Kraftfahrzeuges befördert. Mit einem Transportstuhl sind dabei insbesondere Rollstühle und Tragestühle gemeint. Ferner betrifft die Erfindung ein Verfahren zum sicheren Ein- und Ausladen sowie zum Befördern von in einem Transportstuhl sitzenden Transportpersonen.

Aus der Praxis sind Kraftfahrzeuge mit verschiedenen Plattformlift-Systemen bekannt, um eine in einem Transportstuhl sitzende Personen in ein Kraftfahrzeug zu heben und mit dem Kraftfahrzeug zu transportieren. Außenlifte sind derart an einem Kraftfahrzeug montiert, dass diese von außen zugänglich sind. Diese können beispielsweise in einer Art Kassette verstaut sein, um im Bedarfsfall eine Plattform aus der Kassette herauszufahren. Die Plattform kann dann auf das Fahrbahnniveau abgesenkt werden, um einen Patienten oder einen Transportstuhl aufzuladen und die Plattform anschließend auf das Niveau des Fahrzeugbodens anzuheben. Dort muss der Patient bzw. der Transportstuhl dann in Fahrtrichtung ausgerichtet werden und separat durch das Personal angegurtet werden. Ferner muss der Transportstuhl anschließend noch in seiner Position fixiert werden und der Patient gegenüber dem Transportstuhl fixiert werden, um einen transportfähigen Zustand herzustellen. Es sind insoweit verhältnismäßig viele Arbeitsschritte erforderlich, was zeit-, personal- und kostenintensiv ist.

Aus DE 29 28 607 A1 ist eine schwenkbare waagerechte Hubplattform bekannt, die an einer auf der Ladefläche eines Lastkraftwagens stehenden lotrechten Tragsäule gehalten sowie heb- und senkbar ist. Das Verschwenken der Hubplattform erfolgt um die Längsachse der Tragsäule. Die Hubplattform dient zum Be- und Entladen, insbesondere von Personen, und weist lotrechte Führungen auf, die zum einen zwischen der Hubplattform und einem von der Tragsäule gehaltenen Hubgerüst und zum anderen zwischen der Tragsäule und dem Hubgerüst angeordnet sind. Die lotrechten Führungen sind über Tragarme derart voneinander beabstandet, dass eine Hubstange, die längsverschiebbar in einer Zylinderhülse geführt ist, das Anheben und Absenken der Hubplattform außerhalb des Lastkraftwagens ermöglicht. Dadurch kann die Hubplattform auch auf ein Niveau angehoben werden, das höher ist als das Niveau der Ladefläche in dem Lastkraftwagen. Nachteilig an der Hubplattform ist, dass nach dem Einladen einer Person, insbesondere einer in einem Rollstuhl oder Tragestuhl sitzenden Person, die noch innerhalb eines Kraftfahrzeuges positioniert und dort in einen transportfähigen Zustand gebracht werden muss. Dies ist mit erheblichem Aufwand verbunden.

Aus US 4,664,584 ist ein drehbarer Hubplattform bekannt. Die Hubplattform umfasst einen hydraulischen Lift mit einer vertikalen Teleskopstange und einem an dessen unterem Ende angebrachten horizontalen Tragarm, welcher eine Rollstuhlplattform trägt. Die Rollstuhlplattform umfasst eine vordere Sicherheitsbarriere, eine hintere Einstiegsrampe, welche sich zu einer Hinterrad-Sicherheitsbarriere hochklappen lässt, und eine horizontal bewegliche Plattformverlängerung. Die Bewegungen der Plattform werden elektrisch gesteuert.

Der Erfindung liegt die Aufgabe zugrunde, ein Kraftfahrzeug mit einem Plattformlift-System zur Verfügung zu stellen, das es ermöglicht, Menschen mit motorischen Einschränkungen, insbesondere in einem Transportstuhl sitzende Menschen, sicher, komfortabel und platzsparend in ein Kraftfahrzeug einzuladen und innerhalb des Kraftfahrzeuges möglichst einfach und sicher in einen transportfähigen Zustand zu bringen.

Die Lösung der Aufgabe erfolgt erfindungsgemäß mit den Merkmalen der unabhängigen Ansprüche. Weitere Ausführungsformen und Vorteile der Erfindung sind in Verbindung mit den abhängigen Ansprüchen beschrieben.

Ein erfindungsgemäßes Kraftfahrzeug umfasst ein Plattformlift-System, das mindestens folgende Elemente aufweist: eine Plattform für die Aufnahme eines Transportstuhls mit einer darauf sitzenden Transportperson, eine Hubeinheit zur Durchführung von vertikalen Relativbewegungen der Plattform zwecks Anheben und Absenken der Plattform und eine Horizontal-Verfahrvorrichtung zur Durchführung von horizontalen Relativbewegungen zwischen der Plattform und der Hubeinheit. Dabei ist die Plattform mittels der Hubeinheit und/oder der Horizontal-Verfahrvorrichtung zwischen einer Außenposition außerhalb des Kraftfahrzeuges und einer Transportposition innerhalb des Kraftfahrzeuges verfahrbar. Die Horizontal-Verfahrvorrichtung und/oder die Hubeinheit weisen zudem eine Zwangsführung auf, um die Plattform auf einer mindestens teilweise zwangsgeführten Bahn bewegen zu können, wobei die Zwangsführung durch ein Mehrfachgelenk mit einer funktional verbundenen Koppelstange und/oder eine Parallelkinematik gebildet ist.

Das erfindungsgemäße Kraftfahrzeug schafft insoweit eine sichere und komfortable Lösung, Menschen mit motorischen Einschränkungen in ein Kraftfahrzeug einzuladen und innerhalb des Kraftfahrzeuges möglichst einfach und sicher in einen transportfähigen Zustand zu bringen, als sowohl die Positionierung der Transportperson auf dem Transportstuhl als auch die Positionierung des Transportstuhls auf der Plattform außerhalb des Kraftfahrzeuges stattfinden kann. Ein wichtiger Aspekt dabei ist, dass außerhalb des Kraftfahrzeuges ausreichend Bewegungsraum zur Verfügung steht, wohingegen innerhalb des Kraftfahrzeuges der Bewegungsraum meist schon aufgrund der begrenzten Breite, Länge und Höhe des Kraftfahrzeuges eingeschränkt ist. Dies gilt umso mehr für Krankentransport und Rettungstransportfahrzeuge, welche häufig Ausstattungsgegenstände für unterschiedliche Einsatzzwecke mitführen, beispielsweise eine zusätzliche Trage mit Tragentisch oder eine Liegefläche zur Behandlung von liegend zu transportierenden Patienten. Die Kernidee der Erfindung besteht insoweit darin, ein Kraftfahrzeug mit einem Plattformlift-System bereitzustellen, mittels welchem eine Plattform mit darauf befindlicher Transportperson zwischen einer Außenposition außerhalb eines Kraftfahrzeuges (insbesondere neben oder hinter einem Kraftfahrzeug) und einer in dem Kraftfahrzeug befindlichen Transportposition derart verfahrbar ist, dass die auf der Plattform befindliche Transportperson innerhalb des Kraftfahrzeuges in eine transportfähigen Zustand gebracht wird.

In Verbindung mit der Betriebssicherheit und der Reduzierung des Risikos von Fehlbedienungen des erfindungsgemäßen Kraftfahrzeuges, insbesondere beim Verfahren der Plattform zwischen der Außenposition und der Transportposition, ist es vorteilhaft, dass die Horizontal-Verfahrvorrichtung und/oder die Hubeinheit eine Zwangsführung aufweisen, um die Plattform auf einer mindestens teilweise zwangsgeführten Bahn bewegen zu können. In diesem Fall beschränkt sich die sichere Bedienung im Wesentlichen darauf, dass die Plattform auf der zwangsgeführten Bahn bewegt wird und vorab geprüft wird, dass sich auf der Bahn keine Personen oder sonstigen Hindernisse bzw. Gegenstände befinden, mit welchen die Plattform, der Transportstuhl und/oder die Transportposition kollidieren könnte. Mit einer zwangsgeführten Bahn sind sowohl lineare als auch kurvenförmige Bahnen gemeint. Eine lineare Zwangsführung kann beispielsweise mittels geeignet ausgebildeter Führungsschienen und/oder Teleskopschienen realisiert sind. Ebenfalls wird auf rollen- oder kugelgelagerte Schienen- oder sonstige Systeme mit Linearführung verwiesen. Für die Realisierung kurvenförmiger Bahnen wird insbesondere auf Gelenkverbindungen, Parallelkinematiken und/oder Führungssysteme mit kurvenförmigen Führungsstrukturen, wie z.B. geeignete Schlitze und damit gekoppelte Kupplungselemente.

Eine wie vorstehend beschriebene Zwangsführung ist besonders einfach und mit einer geringen und somit überschaubaren Anzahl von Einzelelementen durch ein Mehrfachgelenk mit einer funktional verbundenen Koppelstange und/oder durch eine Parallelkinematik - insbesondere zwei oder mehr Kragarme aufweisende Parallelkinematik - gebildet.

Schon an dieser Stelle wird dazu angemerkt, dass mit den Begriffen Hubeinheit und Horizontal-Verfahrvorrichtung nicht zwingend zwei voneinander getrennte und separat ausgebildete Vorrichtungen zu verstehen sind. Entscheidend ist lediglich, dass zum einen Mittel vorgesehen sind, um die Plattform in vertikaler Richtung verfahren zu können, insbesondere um den Höhenunterschied zwischen der Fahrbahn außerhalb des Fahrzeuges und dem (stets höher angeordneten) Fahrzeugboden überwinden zu können, und zum anderen Mittel, um die Plattform in horizontaler Richtung in das Kraftfahrzeug hineinbewegen zu können. Die mindestens eine Hubeinheit und die mindestens eine Horizontal-Verfahrvorrichtung können insoweit auch zu einer komplexen Verfahrvorrichtung miteinander verschmolzen sein. Dies ist vom Wortlaut des Anspruchs 1 ebenfalls umfasst.

Optional kann bei einem Plattformlift-System eines erfindungsgemäßen Kraftfahrzeuges auch die Plattform zusätzlich verschwenkbar gegenüber der Hubeinheit gelagert sein. Dies hat insbesondere dann Vorteile, wenn die Orientierung der Plattform relativ zum Fahrzeug zwischen der Transportposition und der Außenposition veränderbar sein soll, beispielsweise um außerhalb des Kraftfahrzeuges wenig Raum zu beanspruchen, um die auf der Plattform sitzende Transportperson innerhalb des Kraftfahrzeuges in oder gegen die Fahrtrichtung zu positionieren und/oder um die Plattform durch eine nur begrenzt große Öffnung eines Kraftfahrzeuges (beispielsweise eine Seitentür) so hindurch zu bewegen, dass die Transportperson auch dann sicher nicht mit einem die Öffnung umgebenden Element in Kontakt gerät, wenn Körperteile in ein oder mehreren Richtungen gegenüber der Plattform hervorragen.

In einer praktischen Ausführungsform eines erfindungsgemäßen Kraftfahrzeuges ist mindestens ein Fixierelement zur Fixierung des Transportstuhls und/oder der Plattform gegenüber dem Fahrzeugboden vorgesehen, um die Plattform und/oder den Transportstuhl in der Transportposition relativ gegenüber dem Fahrzeugboden zu fixieren. Dabei kann die Fixierung insbesondere kraftschlüssig und/oder formschlüssig erfolgen. Vorzugsweise ist die Horizontal-Verfahrvorrichtung und/oder die Hubeinheit derart ausgebildet, dass sich damit die Fixierung herstellen und/oder wieder lösen lässt. Insoweit wird insbesondere auf die Möglichkeit verwiesen, die Fixierung dadurch zu bewirken, dass eine Hubeinheit die Plattform innerhalb des Fahrzeuges mit ausreichend großer Kraft gegen die Fahrzeugboden andrückt, um die Plattform - auch in einem Crashfall - ausreichend sicher gegenüber dem Fahrzeugboden zu fixieren. Ferner wird auf die alternativ oder in Ergänzung realisierbare Möglichkeit verwiesen, die Plattform innerhalb des Fahrzeuges in eine komplementär zur Plattform ausgebildete Vertiefung einzusetzen, um die Plattform in horizontaler Richtung formschlüssig gegenüber dem Fahrzeugboden zu fixieren. Darüber hinaus wird auf kinematische Lösungen verwiesen, bei welchen die Bewegung mittels der Hubeinheit und/oder mittels der Horizontal-Verfahrvorrichtung so gesteuert ist, dass spätestens mit Erreichen der Transportposition eine ausschließlich oder ergänzend formschlüssige Fixierung der Plattform gegenüber dem Fahrzeugboden erfolgt. Dies kann beispielsweise mittels eines im Fahrzeugboden vorgesehenen Schlitzes erfolgen, der während des Einfahrens der Plattform von einem Kupplungselement (insbesondere einem am Transportstuhl ausgebildeten Kupplungselement) durchgriffen wird, um den Transportstuhl in der Transportposition in Fahrzeugquerrichtung und/oder in Fahrzeughochrichtung mittels eines mit dem Schlitz zusammenwirkenden Elements (z.B. Pilzkopf oder T-förmiges Element) gegenüber dem Fahrzeugboden zu fixieren.

In Bezug auf die vorstehend beschriebene formschlüssige Variante einer Verbindung ist bei einer besonders einfach und kostengünstig umsetzbaren Lösung vorgesehen, dass die Hubeinheit selbst, die Horizontal-Verfahrvorrichtung und/oder ein System aus mindestens einem Bolzen und einer damit korrespondierenden Bolzenaufnahme oder einem damit korrespondierenden Niederhalter als Fixierelement ausgebildet sind.

Nur beispielhaft wird insoweit auf die erste Möglichkeit verwiesen, einen - sich insbesondere in vertikaler Richtung erstreckenden - Bolzen fest mit der Plattform zu verbinden und eine fest mit dem Fahrzeugboden verankerte Bolzenaufnahme vorzusehen oder umgekehrt.

Ebenfalls beispielhaft wird auf die Möglichkeit verwiesen, einen - sich insbesondere in horizontaler Richtung erstreckenden - Bolzen fest mit der Plattform zu verbinden und einen fest mit dem Fahrzeugboden verankerten Niederhalter vorzusehen, insbesondere derart, dass beim Erreichen der Transportposition die Plattform gegenüber dem Fahrzeugboden in Hochrichtung und/oder in mindestens einer horizontalen Richtung formschlüssig festgelegt ist.

In einer weiteren praktischen Ausführungsform eines erfindungsgemäßen Kraftfahrzeuges, das Teil eines Systems mit einem dem Kraftfahrzeug zugordneten Transportstuhls ist, ist an dem Transportstuhl ein - insbesondere vertikal nach unten hervorragender - Führungsbolzen ausgebildet und an der Plattform und/oder in dem Fahrzeugboden ein mit dem Führungsbolzen korrespondierender Schlitz ausgebildet, wobei durch - vorzugsweise ausschließlich oder überwiegend horizontales - Einführen und Bewegen des Führungsbolzens in den Schlitz eine in Fahrzeughochrichtung formschlüssige Verbindung herstellbar ist.

Besonders bevorzugt ist ein an der Plattform und/oder am Fahrzeugboden ausgebildeter Schlitz vorgesehen, der sich von einem freien Ende aus einseitig bis zu einem Anschlag erstreckt. In diesem Fall ist ein nicht durchgehender Schlitz an der Plattform und/oder an dem Fahrzeugboden ausgebildet. So kann durch Abstimmung der Breite des den Schlitz durchragenden Kupplungselements eine in Fahrzeugquerrichtung nach rechts und links sowie nach oben formschlüssige Verbindung zwischen Transportstuhl und Plattform und/oder zwischen Transportstuhl und Fahrzeugboden hergestellt werden. Ferner kann durch den Anschlag auch zusätzlich eine in Fahrzeuglängsrichtung - vorzugsweise nach vorne - formschlüssige Verbindung erzielt werden, um sicherzustellen, dass die Plattform gegenüber dem Fahrzeugboden in einem Frontcrashfall sicher fixiert ist. Optional kann in dem zuletzt beschriebenen Fall auch eine formschlüssige Festlegung des Transportstuhls gegenüber der Plattform und/oder des Transportstuhls gegenüber dem Fahrzeugboden vorgesehen sein, indem an der Plattform und/oder an dem Transportstuhl ein Verriegelungselement vorgesehen ist, das nach Erreichen der Transportposition eine Rückwärtsbewegung des Kupplungselements aus dem Schlitz heraus unterbindet. Alternativ oder in Ergänzung dazu kann eine Rückwärtsbewegung mittels einer verschwenkbaren Klappe verhindert werden, die auf der Seite installiert ist, wo der Schlitz bis zu einem seitlichen Rand des Plattform ausgebildet ist.

Wie vorstehend bereits anhand verschiedener konkreter Ausführungsbeispiele erläutert wurde, ist es bevorzugt, wenn die Hubeinheit und/oder die Horizontal-Verfahrvorrichtung so ausgebildet ist, dass die Plattform in eine Transportposition bringbar ist, in welcher der Transportstuhl und/oder die Plattform mindestens in eine Richtung formschlüssig und/oder kraftschlüssig gegenüber dem Fahrzeugboden fixiert ist. Dabei ist es bevorzugt, wenn die Plattform in mehreren Richtungen formschlüssig und/oder kraftschlüssig festgelegt ist. Besonders bevorzugt ist es, wenn die Plattform in der Transportposition in Fahrzeuglängsrichtung, in Fahrzeugquerrichtung und/oder in Fahrzeughochrichtung gegenüber dem Fahrzeugboden fixiert ist. Insbesondere wird in diesem Zusammenhang allgemein auf die Möglichkeit verwiesen, den Transportstuhl und/oder die Plattform in zwei oder allen drei der genannten Richtungen formschlüssig gegenüber dem Fahrzeugboden festzulegen.

Wenn im Zusammenhang mit einer wie oben beschriebenen Zwangsführung eine Schwenkanordnung vorgesehen ist, wird innerhalb des Kraftfahrzeuges nur wenig Bauraum für das Bewegen und Mitführen einer Plattform beansprucht. Dies gilt insbesondere für Plattformen, die rechteckig ausgebildet sind und/oder Plattformen, die so gestaltet sind, dass einzelne Körperteile einer Transportperson in der Praxis häufig gegenüber einem seitlichen Rand der Plattform hervorstehen, beispielsweise die Füße oder Teile davon (z.B. die Fußspitzen). Durch eine geeignete Schwenkanordnung kann sichergestellt werden, dass die Plattform platzsparend in einer Fahrzeugöffnung eingefahren wird und die Plattform dennoch innerhalb des Kraftfahrzeuges in eine für die Transportperson vorteilhafte Relativausrichtung gebracht wird, insbesondere in eine Ausrichtung mit Blick der Transportperson in Fahrtrichtung.

In einer ersten, besonders praktischen Ausführungsform mit Schwenkanordnung ist zur Erzielung einer geführten Schwenkbewegung ein Ein- oder Mehrfachgelenk vorgesehen, insbesondere um rotatorische Bewegungen der Plattform um eine sich in Fahrzeughochrichtung erstreckende Drehachse zu ermöglichen.

In einer weiteren praktischen Ausführungsform, die alternativ oder in Ergänzung realisiert sein kann, ist eine Parallelkinematik vorgesehen, die eine zwangsgeführte Bewegung der Plattform in Fahrzeughochrichtung und in Fahrzeuglängsrichtung oder in Fahrzeughochrichtung und Fahrzeugquerrichtung oder in Fahrzeuglängsrichtung und in Fahrzeugquerrichtung erlaubt. Eine solche Parallelkinematik eignet sich insbesondere für eine zwangsgeführte und zumindest abschnittsweise gleichzeitige Bewegung der Plattform in Fahrzeughochrichtung und in Fahrzeuglängsrichtung, beispielsweise um eine Plattform von einer Außenposition hinter einem Kraftfahrzeug durch eine Hecköffnung in das Kraftfahrzeug zu verfahren.

Das Plattformlift-System eines erfindungsgemäßen Kraftfahrzeuges weist eine besonders kompakte Bauform auf, wenn die Hubeinheit und/oder die Horizontal-Verfahreinheit an einer gemeinsamen Tragstruktur angeordnet sind. In diesem Zusammenhang wird insbesondere darauf verwiesen, dass als Tragstruktur insbesondere ein sich in vertikaler Richtung erstreckendes Tragelement und/oder Bodenanker dienen kann. Vorzugsweise ist die Tragstruktur fest mit dem Fahrzeugboden, einer Seitenwand des Kraftfahrzeuges, einer Trennwand des Kraftfahrzeuges oder einem anderen fahrzeugfesten Element verbunden. Dies kann beispielsweise durch Verschrauben, Verschweißen oder eine andere Methode zur Herstellung einer sicheren Verbindung erfolgen, vorzugsweise zum Fahrzeugboden oder einem fest mit dem Fahrzeugboden verbundenen Element.

In einer weiteren praktischen Ausführungsform eines erfindungsgemäßen Kraftfahrzeuges ist an der Plattform oder an einem fahrzeugfest im Kraftfahrzeug festgelegten Element mindestens ein Gurt und/oder mindestens ein Gurtschloss zur Festlegung eines Gurtes angeordnet. Dies hat den Vorteil, dass die Transportperson, welche auf dem Transportstuhl sitzt, welcher sich auf der Plattform befindet, in dem Kraftfahrzeug in gleicher Art und Weise angegurtet werden kann wie ein Fahrzeuginsasse, der sich auf einem Standard-Fahrzeugsitz befindet. Dies geht insbesondere deshalb, weil die Plattform in der Transportposition genauso sicher mit dem Fahrzeugboden verankert ist wie ein fest installierter Fahrzeugsitz.

Besonders bevorzugt ist es, wenn der Gurt und/oder das Gurtschloss an der Plattform selbst oder unmittelbar benachbart zu der Plattform derart angeordnet sind, dass der Gurt und/oder das Gurtschloss beim Verfahren zwischen der Transportposition und der Außenposition mit der Plattform bewegt werden. In diesem Fall kann eine auf einem Transportstuhl sitzende Transportperson bereits in der Außenposition vollständig gegenüber dem Transportstuhl und der Plattform angegurtet werden, was es einer Bedienperson erspart, sich mit der Transportperson in der Kraftfahrzeug begeben zu müssen und dort - in meist beengten Platzverhältnissen - eine ausreichende Sicherung der Transportperson vorzunehmen, insbesondere die Transportperson dort erst in der Transportposition anzugurten.

Die Plattform ist in einer weiteren praktischen Ausführungsform vorzugsweise fest verbunden mit einem sich in vertikaler Richtung erstreckenden Verbindungselement, welches mit der Hubeinheit und/oder mit der Horizontal-Verfahrvorrichtung verbunden ist. Dabei kommen als Verbindungselement insbesondere eine sich überwiegend in Fahrzeughochrichtung erstreckende Plattform-Stütze, ein umlaufender Tragrahmen, ein sich in Fahrzeughochrichtung und in Fahrzeugquerrichtung erstreckendes Flachstahlelement und/oder eine sich in Fahrzeughochrichtung und in Fahrzeuglängsrichtung ersteckende Fachwerkstruktur in Betracht.

Wenn an der Plattform ein erhöhter Mittelsteg und/oder ein Schlitz zum Zusammenwirken mit einem Kupplungselement eines Transportstuhls ausgebildet ist, kann bereits beim Auffahren des Transportstuhls auf die Plattform durch Einführen des Kupplungselements in den Schlitz auf einfache Art und Weise eine in einer Längsrichtung, in Querrichtung und/oder in Hochrichtung formschlüssige Verbindung zwischen Transportstuhl und Plattform hergestellt werden. In gleicher Art und Weise kann anschließend zusätzlich auch eine weitere Verbindung zwischen Transportstuhl und Fahrzeugboden hergestellt werden, insbesondere in dem der auf der Plattform stehende Transportstuhl gemeinsam mit der Plattform mittels der Hubeinheit und/oder der Horizontal-Verfahrvorrichtung bewegt werden.

Wenn an der Plattform als Führung für Räder eines Transportstuhls dienende Fahrrinnen ausgebildet sind und/oder an der Plattform eine klauenartige Struktur zum Zusammenwirken mit einem seitens des Fahrzeugbodens installierten Funktionsstruktur zur Fixierung und/oder Führung der Plattform gegenüber dem Fahrzeugboden ausgebildet ist, kann dies die Sicherheit vor Fehlbedienungen weiter erhöhen und die intuitive Bedienbarkeit erleichtern.

Die Hubeinheit ist vorzugsweise fahrzeugfest montiert ist und/oder insbesondere an einer Trennwand nahe einer Seitentür oder an einer Seitenwand nahe einer rückseitigen Öffnung des Kraftfahrzeuges angeordnet. Damit werden der Platzbedarf, die benötigten Verfahrwege der Plattform und das Gewicht sowie der Zeitbedarf für die Bedienung des Plattformlift-Systems gering gehalten.

Die Erfindung betrifft auch ein Verfahren zum sicheren Ein- und Ausladen sowie zum Befördern von in einem Transportstuhl sitzenden Transportpersonen mit Hilfe eines wie vorstehend beschriebenen Kraftfahrzeuges. Gemäß dem Verfahren wird zum Einladen und Befördern zunächst der Transportstuhl mit der darauf sitzenden Transportperson auf der Plattform positioniert, um die Plattform dann von der Außenposition außerhalb des Kraftfahrzeuges in eine Transportposition innerhalb des Kraftfahrzeuges zu verfahren. Vorzugsweise wird die Transportperson zuvor bereits auf der Plattform gesichert, insbesondere durch Angurten mittels mindestens eines im Bereich der Plattform installierten Gurtes. Das Verfahren hat den Vorteil, dass eine auf einem Transportstuhl sitzende Transportperson komfortabel außerhalb des Kraftfahrzeuges auf der Plattform positioniert und - in einer bevorzugten Variante -auch bereits gesichert werden kann, insbesondere mittels mindestens eines Gurtes. Nach dem Verfahren der Plattform von der Außenposition in die Transportposition befindet sich die Transportperson unmittelbar in einem transportfähigen Zustand, so dass der Transport mit dem Kraftfahrzeug sofort begonnen werden kann.

Auf die Kombination des Verfahrens mit den vorstehend beschriebenen unterschiedlichen Ausführungsformen des Kraftfahrzeuges, die sich daraus ergebenden Varianten zur Durchführung des Verfahrens und die damit verbundenen Vorteile, wird hiermit ausdrücklich verwiesen. Die in Verbindung mit dem Kraftfahrzeug offenbarten Merkmale gelten insoweit auch für die Durchführung eines entsprechend präzisierten und weitergebildeten Verfahrens und sind als korrespondierende Verfahrensmerkmale zu verstehen.

Weitere praktische Ausführungsformen und Vorteile der Erfindung sind nachfolgend im Zusammenhang mit den Zeichnungen beschrieben. Es zeigen:
- Fig. 1: ein Kraftfahrzeug mit einem erfindungsgemäßen Plattformlift-System in einer isometrischen Ansicht von schräg hinten einmal mit geschlossener Seitentür (links oben) und einmal mit geöffneter Seitentür und in einer Horizontalschnittdarstellung ohne Fahrzeugdach (rechts unten),
- Fig. 2: eine vergrößerte Darstellung des in dem Kraftfahrzeug von Figur 1 installierten Plattformlift-Systems mit einem auf der Plattform angeordneten Transportstuhl und einer darauf sitzenden Transportperson in einer Ansicht in Fahrtrichtung des Fahrzeuges von schräg hinten,
- Fig. 3: das Plattformlift-System aus den Figuren 1 und 2 mit einem darauf angeordneten Transportstuhl und einer darauf sitzenden Transportperson in einer Ansicht von schräg hinten,
- Fig. 4: eine Detailansicht des unteren Abschnitts des Transportstuhls und der Plattform aus Figur 3 in einer Ansicht von hinten,
- Fig. 5: eine Ansicht des Fahrzeugbodens und des Plattformlift-Systems aus den Figuren 1-4 in einer Ansicht von schräg vorne,
- Fig. 6: eine Detailansicht des unteren Abschnitts des Transportstuhls und der Plattform aus Fig. 5 vor der Herstellung einer formschlüssigen Verbindung zwischen Plattform und Hubeinheit,
- Fig. 7: eine Detailansicht des unteren Abschnitts des Transportstuhls und der Plattform aus Fig. 5 nach der Herstellung einer formschlüssigen Verbindung zwischen Plattform und Hubeinheit,
- Fig. 8: die wesentlichen Elemente des Plattformlift-Systems aus den Figuren 1 bis 7 in einer Explosionsdarstellung,
- Fig. 9: einen Ausschnitt eines in Hochrichtung betrachtet mittleren Bereichs des Plattformlift-Systems aus den Figuren 1 bis 8 im montierten Zustand in einer Ansicht von schräg vorne,
- Fig. 10: den Ausschnitt des erfindungsgemäßen Plattformlift-Systems gemäß Fig. 9 in einer Ansicht von oben,
- Fig. 11: das Kraftfahrzeug nur mit Fahrzeugboden, den vier Rädern und dem Plattformlift-System in einer Ansicht von schräg vorne, wobei sich die Plattform in der Transportposition befindet,
- Fig. 12: das Plattformlift-System mit Plattform und Darstellung der Bewegungslinie der Plattform von der Transportposition in die Außenposition in einer Ansicht von oben, wobei sich die Plattform in einer Zwischenstellung befindet,
- Fig. 13: das Kraftfahrzeug in der Konfiguration aus Figur 1 ohne Fahrzeugdach in einer Horizontalschnittansicht von der Seite und von oben, wobei sich die Plattform mit einer Transportperson in der Transportposition befindet,
- Fig. 14-17: das Kraftfahrzeug in der Konfiguration aus Figur 1 ohne Fahrzeugdach in einer Horizontalschnittansicht in verschiedenen Zwischenpositionen der Plattform auf dem Weg von der Transportposition in die in den Figuren 18-21 gezeigte Außenposition seitlich neben dem Kraftfahrzeug,
- Fig. 18-19: das Kraftfahrzeug in der Konfiguration aus Figur 1 ohne Fahrzeugdach in einer Ansicht von schräg oben (Fig. 13) bzw. von der Seite (Fig. 14), wobei sich die Plattform in der oberen Außenposition befindet,
- Fig. 20: das Kraftfahrzeug in der Konfiguration aus Figur 1 ohne Fahrzeugdach in einer Ansicht von der Seite, wobei sich die Plattform in der unteren Außenposition befindet,
- Fig. 21-29: verschiedene Ansichten einer weiteren Ausführungsform eines erfindungsgemäßen Kraftfahrzeuges, bei welcher das Plattformlift-System im Bereich einer rückseitigen Fahrzeugöffnung vorgesehen ist und
- Fig. 30-31: zwei verschiedene Ansichten einer weiteren, alternativen Ausführungsform eines erfindungsgemäßen Kraftfahrzeuges, bei welcher das Plattformlift-System ebenfalls im Bereich einer rückseitigen Fahrzeugöffnung vorgesehen ist.

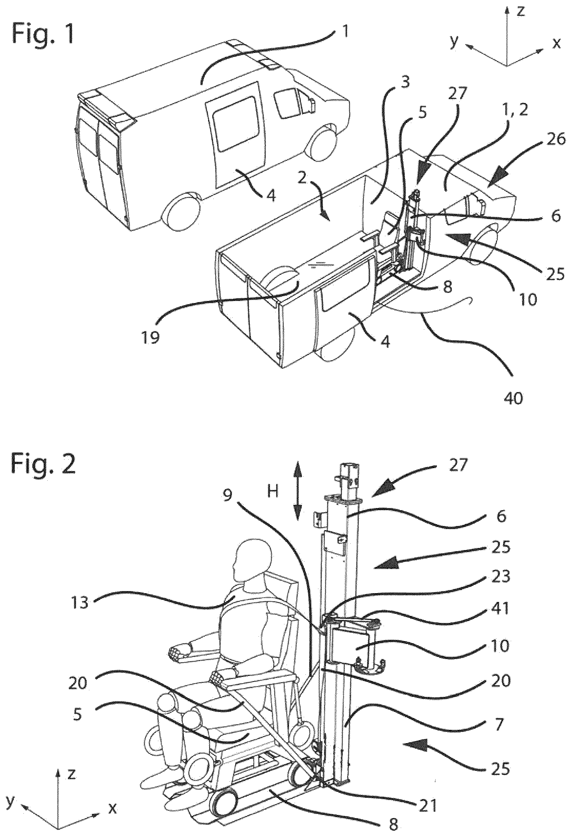

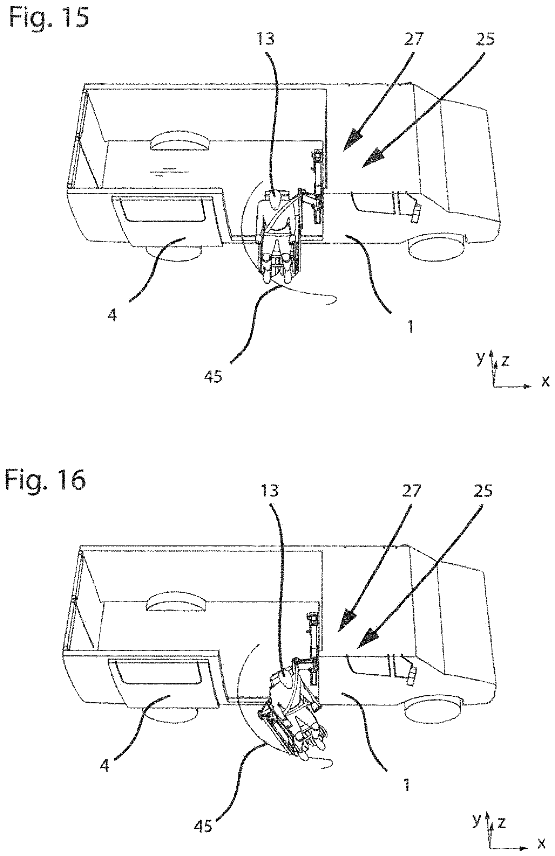

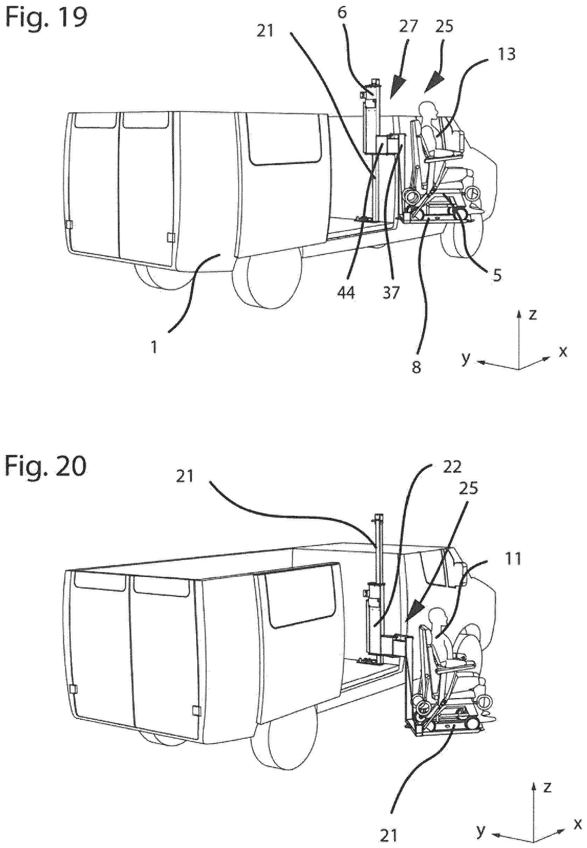

In den Figuren 1-20 sind verschiedene Ansichten einer ersten Ausführungsform eines erfindungsgemäßen Kraftfahrzeuges gezeigt, bei welcher das Plattformlift-System im Bereich einer seitlichen Fahrzeugöffnung - hier einer Seitentür 4 - installiert ist.

In den Figuren sind jeweils verschiedene Ansichten und Positionen eines erfindungsgemäßen Kraftfahrzeuges 1 mit einem Plattformlift-System gezeigt. Die Fahrzeuglängsrichtung (x-Richtung), die Fahrzeugquerrichtung (y-Richtung) und die Fahrzeughochrichtung (z-Richtung) sind in einigen der Figuren mit einem entsprechenden Koordinatensystem gekennzeichnet.

Im Folgenden werden für identische oder zumindest funktionsgleiche Elemente verschiedener Ausführungsformen jeweils die gleichen Bezugszeichen verwendet.

Wie in Figur 1 gut erkennbar ist, handelt es sich bei dem gezeigten Kraftfahrzeug 1 um ein Fahrzeug, das eine vorderseitige Fahrerkabine 26 und einen sich in Fahrzeuglängsrichtung betrachtet dahinter angeordneten Transportraum 2 aufweist. Dabei ist der Transportraum 2, welcher insbesondere für den Transport von Patienten bestimmt ist, durch eine Trennwand 3 von der Fahrerkabine separiert. Bei dem Kraftfahrzeug 1 kann es sich insoweit beispielsweise um einen Krankentransportwagen oder einen Rettungstransportwagen handeln.

Das Kraftfahrzeug 1 weist eine Seitentür 4 auf, die hier als Schiebetür ausgebildet ist. Die Seitentür 4 ist in der Abbildung oben links in Figur 1 geschlossen und in der Abbildung unten rechts in Figur 1 geöffnet. In der Abbildung unten rechts in Figur 1 ist erkennbar, dass im Bereich der Trennwand 3 ein Plattformlift-System 25 installiert ist.

Das Plattformlift-System 25 umfasst eine Hubeinheit 27 mit einem Hubelement 6, das in Richtung des Doppelpfeils H in Figur 2 relativbeweglich gegenüber einem Tragelement 7 angeordnet ist. Dazu ist ein - vorzugsweise motorischer - Antrieb (nicht dargestellt) vorgesehen. Das Tragelement 7 ist in der gezeigten Ausführungsform als sich in Fahrzeughochrichtung erstreckende Vertikalstütze ausgebildet.

Teil der Hubeinheit 27 sind auch ein Gelenk 10 und ein Verbindungselement 9, welches mit dem Gelenk 10 verbunden ist. Das Verbindungselement 9 erstreckt sich in der in den Figuren 1 und 2 gezeigten Transportposition des Plattformlift-System im Wesentlichen in Fahrzeughochrichtung und in Fahrzeugquerrichtung. Es ist hier als dreieckiges Flachstahlelement mit einem daran befestigten Vertikalträger ausgeführt. Das Verbindungselement 9 kann alternativ auch anders ausgebildet sein, insbesondere als umlaufender Tragrahmen, als rechteckige oder anders geformte Platte oder als Tragstruktur nach Art eines Fachwerks.

Das Verbindungselement 9 ist in der gezeigten Ausführungsform starr mit einer Plattform 8 verbunden, die sich im Wesentlichen in horizontaler Richtung erstreckt, d.h. in Fahrzeuglängsrichtung und in Fahrzeugquerrichtung.

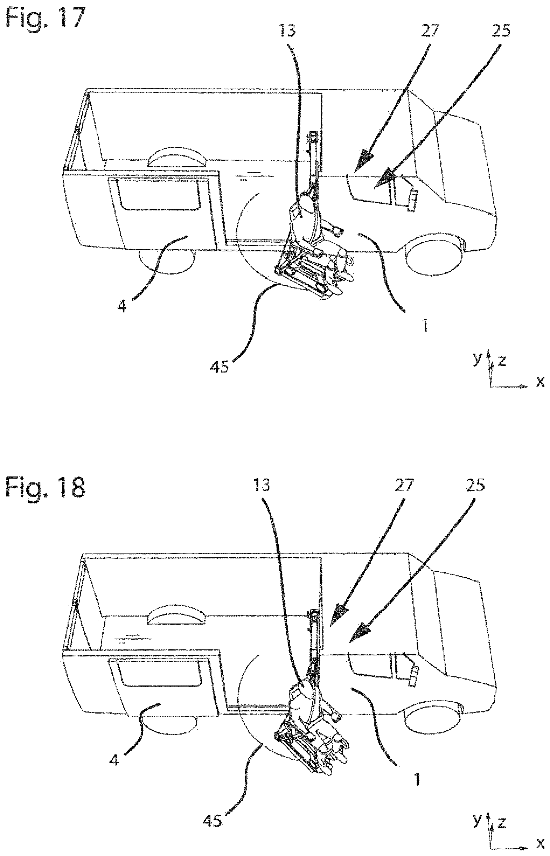

Das Plattformlift-System 25 dient dazu, eine auf einem Transportstuhl 5 sitzende Transportperson 13, auf einfache Art und Weise zwischen einer Außenposition (vgl. Figuren 18-20) außerhalb des Kraftfahrzeuges 1 und einer Transportposition (vgl. Figuren 1-3, 11 und 13) innerhalb des Kraftfahrzeuges 1 zu verfahren, wobei die Transportperson in der Transportposition in einen transportfähigen Zustand bringbar sein soll.

Im Folgenden wird die Detailgestaltung des Plattformlift-Systems 25 sowie die Funktionsweise anhand der Figuren 1 bis 15 erläutert.

Anhand der Figuren 2, 8 und 9 werden im Folgenden technische Merkmale des Plattformlift-Systems 25 beschrieben, die teilweise auch in den übrigen Figuren zu erkennen sind.

An einer Seite des Verbindungselements 9 sind ein Gurt 20 mit einer unteren Gurt-Befestigung 21 und einer oberen Gurt-Umlenkung 23 angeordnet. Bei dem dargestellten Gurt 20 handelt es sich um einen bekannten 3-Punkt-Gurt mit einer daran befestigten Schlosszunge 28.

An der gegenüberliegenden Seite des Verbindungselements 9 ist ein Gurtschloss 24 an einem sich von der Plattform 8 bzw. von einem unteren Abschnitt des Verbindungselements 9 schräg nach oben erstreckenden Halteelement 29 befestigt.

Mit Hilfe des Gurtes 20 lässt sich eine auf einem Transportstuhl 5 sitzende Transportperson 13 - wie in Figur 2 gezeigt - angurten und sowohl innerhalb des Kraftfahrzeuges 1 als auch außerhalb des Kraftfahrzeuges 1 auf einfache Art und Weise innerhalb des Transportstuhls 5 fixieren, weil Gurt 20 und Gurtschloss 24 fest mit der Plattform 8 verbunden und relativ gegenüber dieser festgelegt sind.

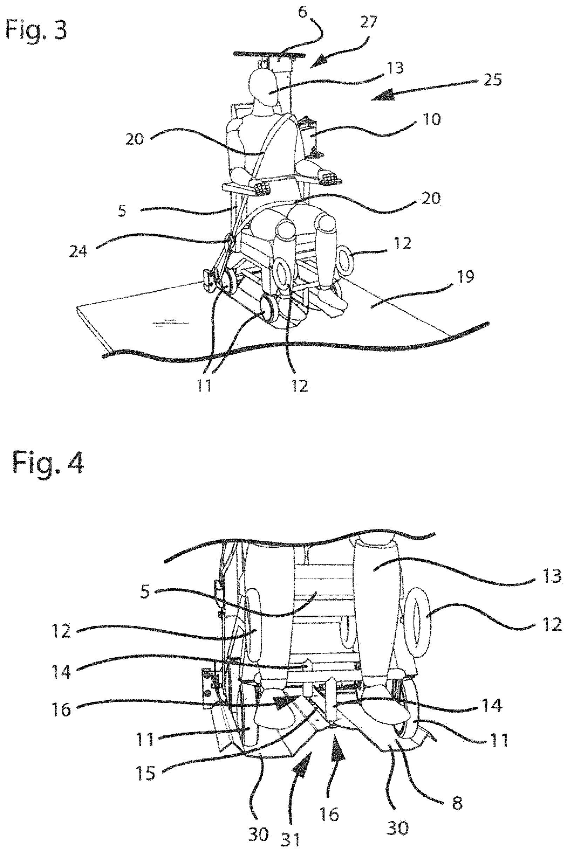

Wie in den Figuren 3 und 4 gut erkennbar ist, weist der Transportstuhl 5 vier Räder 11 und vier Tragegriffe 12 auf, wobei jeweils zwei dieser Elemente vorderseitig und zwei rückseitig angeordnet sind. Es handelt sich um einen aus der Branche bekannten Tragestuhl.

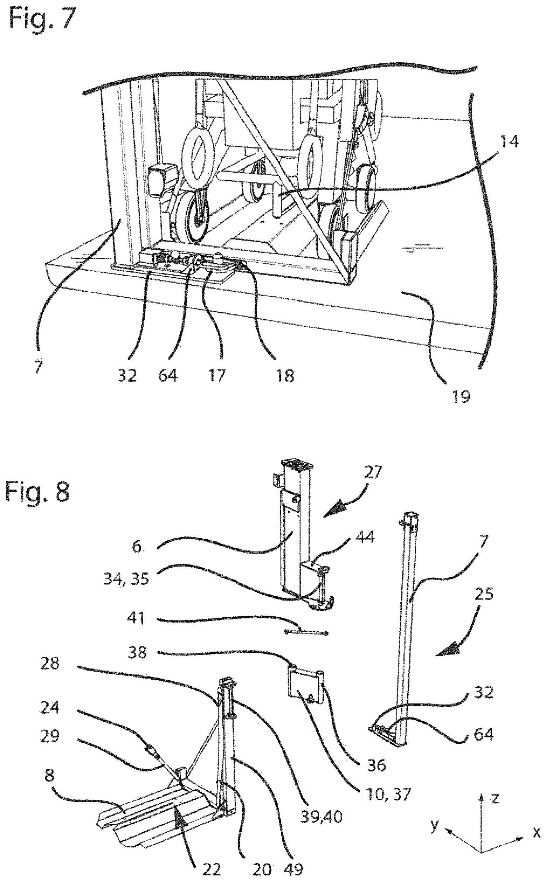

In Figur 4 ist gut erkennbar, dass die Plattform 8 in der gezeigten Ausführungsform zwei als Führung für die Räder 11 dienende Fahrrinnen 30 aufweist, die sich in Längsrichtung der Plattform 8 erstrecken. Zwischen den Fahrrinnen 30 ist ein gegenüber den Fahrrinnen 30 erhöhter Mittelsteg 31 ausgebildet. In dem Mittelsteg 31 ist ein sich in Längsrichtung der Plattform 8 erstreckender Schlitz 15 ausgebildet. Wie in Figur 8 gut erkennbar ist, erstreckt sich der Schlitz 15 von der Vorderseite aus über einen Teil der Länge der Plattform bis zu einem Schlitzende, welches als Anschlag 22 fungiert.

An dem Transportstuhl 5 sind zwei, sich in vertikaler Richtung erstreckende Kupplungselemente 14 vorgesehen, die hier stabartig ausgebildet sind. Am unteren Ende dieser Kupplungselemente 14 sind - hier pilzkopfartig ausgebildete - Führungselemente 16 ausgebildet, welche in der in den Figuren gezeigten Relativanordnung zwischen Transportstuhl 5 und Plattform 8 den Schlitz 15 durchgreifen und eine formschlüssige Fixierung des Transportstuhls 5 gegenüber der Plattform 8 in Hochrichtung und in Querrichtung bewirken. Alternativ zu pilzkopfartig ausgebildeten Führungselementen sind auch andere Führungselemente geeignet, insbesondere solche, die eine Aufweitung aufweisen, die derart gestaltet ist, dass ein Durchgreifen und eine formschlüssige Verbindung in Hochrichtung möglich sind. Nur beispielhaft wird in diesem Zusammenhang auf T-förmige Führungselemente (nicht gezeigt) verwiesen.

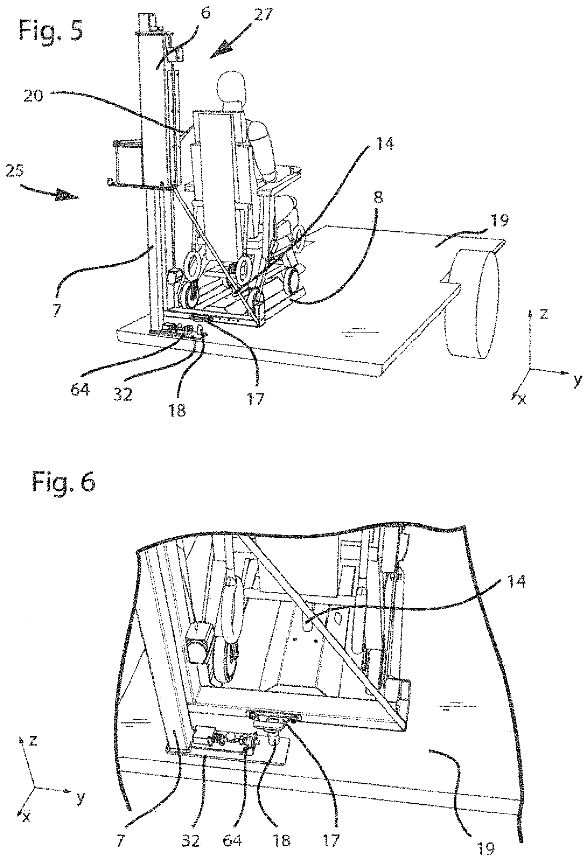

Wie in den Figuren 5 bis 7 gut erkennbar ist, ist rückseitig an der Plattform 8 eine Bolzenaufnahme 17 ausgebildet. Diese besteht in der gezeigten Ausführungsform aus einem Winkelblech mit einer kreisförmigen Durchgangsöffnung. An dem Tragelement 7 der Hubeinheit 27 ist ein Bolzen 18 ausgebildet, der sich vom Fahrzeugboden 19 aus in Fahrzeughochrichtung nach oben erstreckt. In der gezeigten Ausführungsform ist der Bolzen 18 Teil an einer am Fahrzeugboden 19 befestigten Materiallasche 32, die fest mit dem Tragelement 7 der Hubeinheit 27 verbunden ist.

Die Bolzenaufnahme 17 und der Bolzen 18 dienen als Fixierelement und Fixierelement-Aufnahme zur Fixierung der Plattform 8 gegenüber dem Fahrzeugboden 19 des Kraftfahrzeuges bzw. gegenüber dem Tragelement 7 der Hubeinheit 27. Um die Fixierung der Plattform 8 herzustellen, muss die Plattform 8 lediglich aus der in den Figuren 5 und 6 gezeigten Position mittels der Hubeinheit 27 abgesenkt werden, so dass der Bolzen 18 die Bolzenaufnahme 17 durchragt, wie in Figur 7 dargestellt. Die Plattform ist dann in Fahrzeuglängsrichtung und in Fahrzeugquerrichtung formschlüssig gegenüber dem Fahrzeugboden 19 festgelegt, insbesondere wenn ein Verdrehen der Plattform 8 schwerkraftbedingt und/oder aufgrund eines ausreichend großen Motorwiderstandes eines mit dem Gelenk 10 gekoppelten Antriebsmotors ausgeschlossen ist.

Zur formschlüssigen Fixierung der Plattform auch in Fahrzeughochrichtung (z-Richtung) ist auf der Materiallasche 32 ein Verriegelungselement 64 vorgesehen. Dieses kann ausschließlich manuell, ausschließlich motorisch oder kombinierbar ausgebildet sein. In der gezeigten Ausführungsform ist das Verriegelungselement 64 so ausgebildet, dass beim Absenken der Plattform bei Kontakt der Bolzenaufnahme 17 mit dem Verriegelungselement 64 das Verriegelungselement in die Offen-Position gedrückt wird, bis die Bolzenaufnahme so weit abgesenkt ist, dass das Verriegelungselement 64 die Geschlossen-Position einnehmen derart einnehmen kann, dass die Bolzenaufnahme formschlüssig gegen eine Rückbewegung in Fahrzeughochrichtung nach oben fixiert ist. Damit ist die Plattform in Fahrzeughochrichtung formschlüssig festgelegt. Um die Verbindung zwischen Bolzenaufnahme 17 und Bolzen 18 wieder zu lösen, kann das Verriegelungselement motorisch oder manuell in die Offen-Position verfahren werden. Bei motorischer Betätigung kann beispielsweise mittels einer Steuerung erkannt werden, wenn mit der Hubeinheit 27die Plattform angehoben werden soll, und dann die Offen-Position angefahren werden.

Alternativ zu der gezeigten Ausführungsform können in einer nicht dargestellten Ausführungsform auch zwei Bolzen und zwei Bolzenaufnahmen vorgesehen sein, um eine formschlüssige Fixierung auch gegenüber einem Verdrehen der Plattform 8 gegenüber dem Fahrzeugboden 19 herzustellen. Es können auch drei oder mehr Bolzen und korrespondierende Bolzenaufnahmen vorgesehen sein.

Unter Bezugnahme auf die Figuren 8 bis 10 wird im Folgenden auf die besondere Gestaltung des Gelenks 10 der ersten Ausführungsform eingegangen, welches als Zwangsführung in Form einer Schwenkanordnung ausgebildet ist.

Figur 8 zeigt einzelne Elemente des Gelenks 10 in einer Explosionsdarstellung. An dem Hubelement 6 der Hubeinheit 27 eine Gelenkaufnahme 33 ausgebildet. Diese ist in der gezeigten Ausführungsform durch einen Hubelement-Bolzen 34 gebildet, welcher als vertikale Gelenkaufnahme-Drehachse 35 dient.

Der Hubelement-Bolzen 34 dient zur Aufnahme einer ersten Bolzen-Aufnahme 36 eines Gelenkkörpers 37, welche in dieser Ausführungsform als plattenartiges Element mit zwei zylindrischen Durchgangsöffnungen ausgeführt ist. Der Gelenkkörper 37 weist neben der ersten Bolzen-Aufnahme 36 an seinem gegenüberliegenden Ende eine zweite Bolzen-Aufnahme 38 auf. Die zweite Bolzen-Aufnahme 38 dient zur Aufnahme eines Plattform-Bolzens 39, welcher als vertikale Plattform-Drehachse 40 dient. Der Plattform-Bolzen 39 ist an einer sich in vertikaler Richtung erstreckenden Plattform-Stütze 49 ausgebildet, die fest mit dem Tragelement 7 verbunden ist.

Die Plattform 8 ist demzufolge aufgrund des wie oben beschriebenen Doppelgelenks sowohl um die vertikale Gelenkaufnahme-Drehachse 35 als auch um die vertikale Plattform-Drehachse 40 verschwenkbar gelagert.

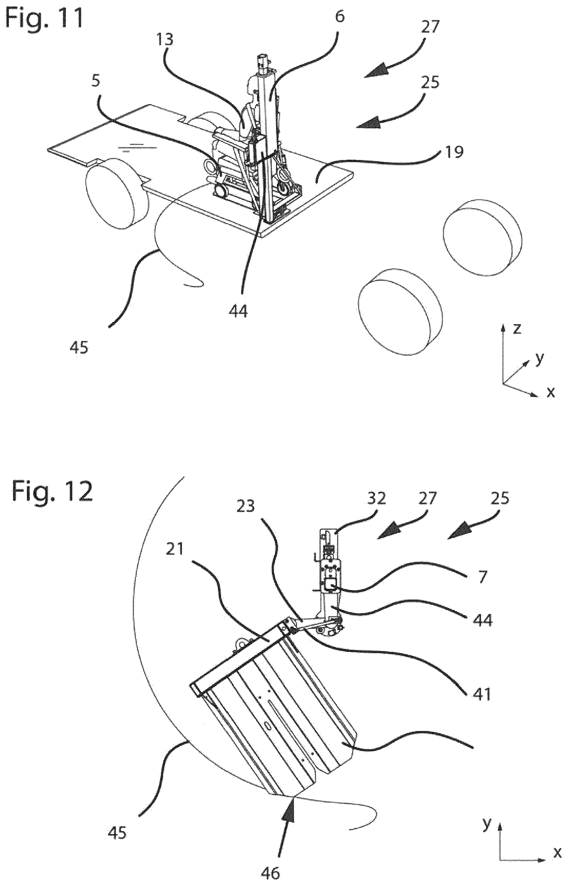

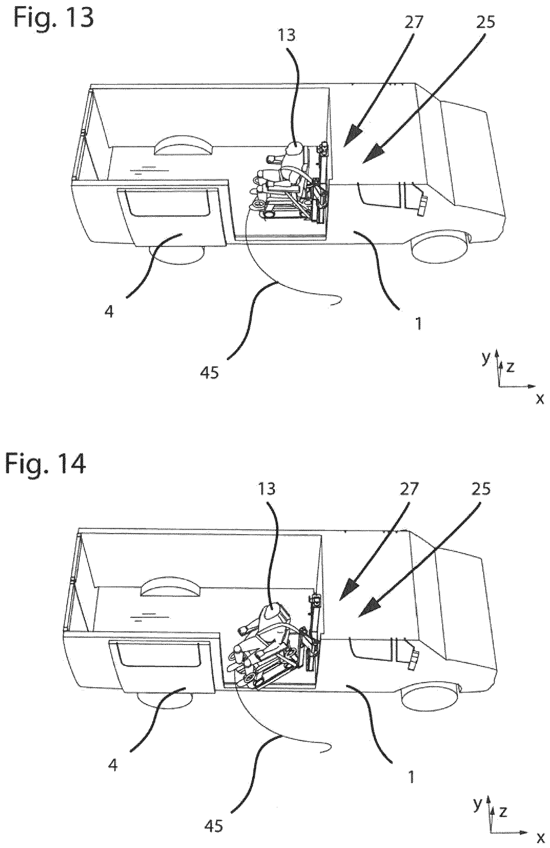

Wie aus den Figuren 8-10 gut ersichtlich ist, ist zusätzlich eine Koppelstange 41 vorgesehen, die einerseits um eine am Hubelement 6 festgelegte, ortsfeste Koppelstangen-Hubelement-Drehachse 42 und andererseits um eine an der Plattform festgelegte, ortsfeste Koppelstangen-Plattform-Drehachse 43 verschwenkbar gelagert ist. Die Anordnung der Koppelstange 41 ist so gewählt, dass sich durch Zusammenwirken aus dem Doppelgelenk mit dem Gelenkkörper 37 und den Bolzen 34, 39 einerseits und der Koppelstange 41 mit den zugehörigen Drehachsen 42, 43 andererseits eine Zwangsführung ergibt, d.h. eine Bewegung der Plattform zwischen der Transportposition (vgl. Fig. 11 und 13) und der Außenposition (vgl. Fig. 18-20) auf einer vorgegebenen, zwangsgeführten Bahn, welche durch die Verfahrlinie 45 skizziert ist.

Die Verfahrlinie 45 entspricht der Kurve, auf welcher sich der in Figur 13 mit dem Pfeil 46 gekennzeichnete Eckpunkt der Plattform 8 bewegt. Die Verfahrlinie 45 weist in der gezeigten Ausführungsform - ausgehend von der Transportposition - einen bogenförmigen Anfangsabschnitt mit relativ großem Radius auf, der dann in einen Mittelabschnitt mit entgegengesetzter Krümmung und mit kleinem Radius übergeht und in einem Endabschnitt nahezu krümmungsfrei ausläuft. Die Verfahrlinie 45 ist so gewählt, dass die Plattform 8 mit einer darauf sitzenden Transportperson 13 auch dann, wenn - wie in den Figuren dargestellt - die Füße zumindest teilweise gegenüber dem vorderen Plattformende hervorragen, kontaktfrei horizontal durch die Seitentür 4 in die Außenposition verschwenkbar ist. Fehlbedienungen, welche zu einem unbeabsichtigten Kontakt der Transportperson 13 mit den die Türöffnung umgehenden Elementen führen, sind dadurch - insbesondere auch dann, wenn für das horizontale Verschwenken kein motorischer Antrieb vorgesehen ist - praktisch ausgeschlossen.

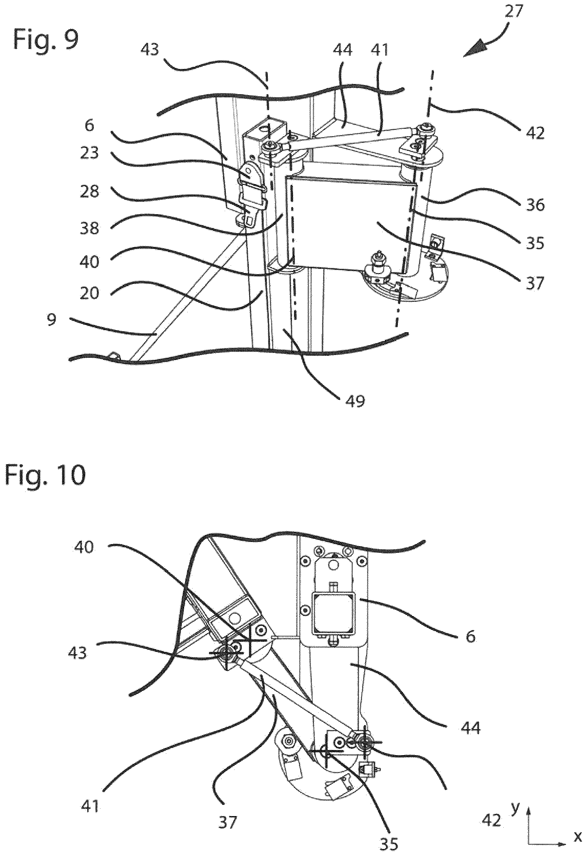

Aus den Figuren 9 und 10 ist gut ersichtlich, dass der Hubelement-Bolzen 34 in der gezeigten Ausführungsform Teil eines horizontalen Auslegers 44 des Hubelements 6 ist.

Aus einer Zusammenschau der Figuren 11 bis 20 lässt sich ferner erkennen, wie sich die Plattform 8 in horizontaler Richtung mit Hilfe des Gelenks 10 translatorisch und rotatorisch bewegen lässt. Das Gelenk 10 mit dem Gelenkkörper 37, welcher das Hubelement 6 und die Plattform 8 funktional miteinander verbinden, ist damit zentraler Teil einer separat ausgebildeten Horizontal-Verfahrvorrichtung 50 dieser Ausführungsform. Dabei ist die zusätzlich rein vertikale Bewegungsmöglichkeit der Plattform 8 durch die Hubeinheit 27 mit dem Hubelement 6 von der horizontalen Verfahrmöglichkeit entkoppelt. Die insoweit von der Horizontal-Verfahrvorrichtung 50 entkoppelte Hubeinheit 6 wird sowohl für das Verfahren der Plattform vom Fahrbahnniveau auf das Fahrzeugbodenniveau als auch für eine formschlüssige Festlegung der Plattform 8 gegenüber dem Fahrzeugboden mittels Bolzen 18 und Bolzenaufnahme 17 genutzt bzw. eingesetzt.

Der Transportstuhl 5 mit einer darauf sitzenden Transportperson 13 lässt sich als eine relativ zueinander fixierte Einheit aus der in Figur 8 gezeigten Transportposition in die in Figur 10 gezeigte Außenposition verfahren. Dies kann manuell erfolgen, wenn kein motorischer Antrieb vorgesehen ist oder mittels eines geeigneten Antriebs. Um zunächst die Verbindung aus Bolzen 18 und Bolzenaufnahme 17 zu lösen, muss in einem ersten Verfahrensschritt die Plattform 8 mittels der Hubeinheit 32 angehoben werden, bis der Bolzen außer Eingriff der Bolzenaufnahme 17 gelangt ist. Dann kann die Plattform 8 mit dem Transportstuhl 5 in die Außenposition verschwenkt werden. Besonders vorteilhaft ist es, wenn die Hubeinheit dazu ausgebildet ist, die Plattform in der Außenposition bis auf das Fahrbahnniveau abzusenken, um dann den Transportstuhl 5 mittels der Räder 11 von der Plattform 8 auf die Fahrbahn oder den Bürgersteig zu schieben und zu einem Zielort zu bewegen.

Wie aus den Figuren 18 bis 20 gut ersichtlich ist, befinden sich in der Außenposition der Gelenkkörper 37 und der Ausleger 44 in einer gestreckten Lage. Sie sind dann nebeneinander angeordnet und somit ausgeklappt.

Dagegen befinden sich der Gelenkkörper 37 und der Ausleger 44 in der Transportposition, wie z.B. in den Figuren 2 und 9 gezeigt, in einer gestauchten Lage. Sie sind dann hintereinander angeordnet und somit eingeklappt.

In der Außenposition ist die Plattform 8 ferner in eine Position vollständig außerhalb des Kraftfahrzeuges 1 verfahren, die es ermöglicht, die Plattform 8 mit einer darauf sitzenden Transportperson 13 in einem Transportstuhl 5 mittels der Hubeinheit 27 von dem Niveau des Fahrzeugbodens 19 auf das Fahrbahnniveau abzusenken und umgekehrt wieder anzuheben.

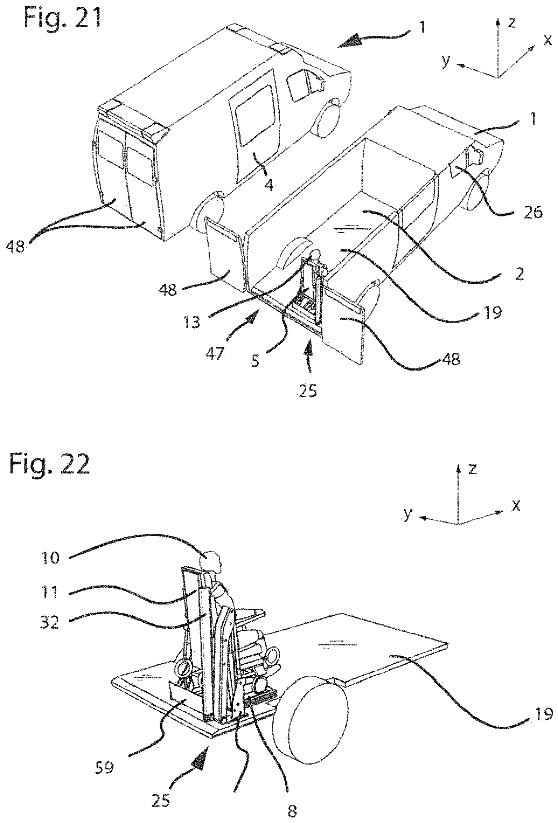

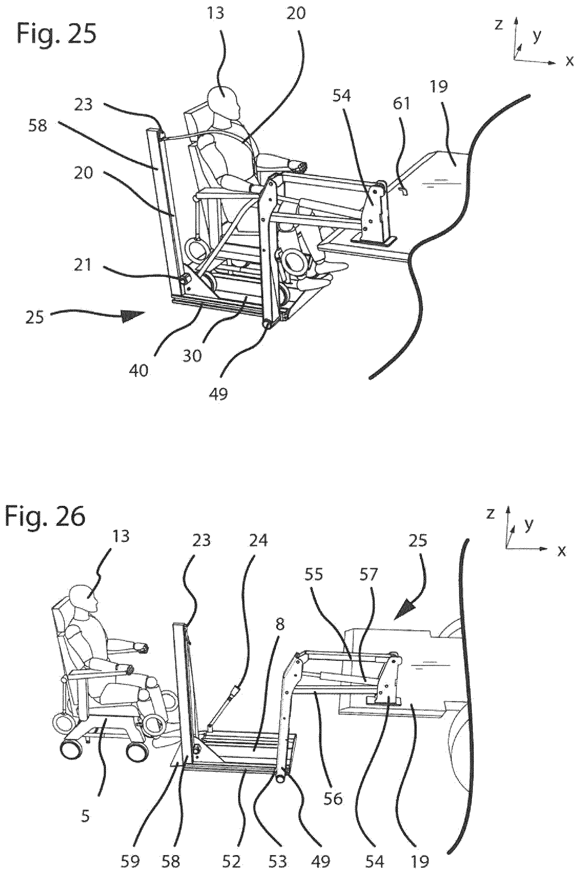

In den Figuren 21 bis 29 ist eine weitere Ausführungsform eines erfindungsgemäßen Kraftfahrzeuges mit einem anderen Plattformlift-System 25 gezeigt. Für Elemente der nachfolgend beschriebenen, alternativen Ausführungsformen, die identisch oder zumindest funktionsgleich mit den vorstehend beschriebenen Elementen sind, werden im Folgenden die gleichen Bezugszeichen wie bei der ersten Ausführungsform verwendet.

Das in den Figuren 21 bis 29 gezeigte Plattformlift-System 25 ist für den Bereich einer Hecköffnung 47 eines Kraftfahrzeuges 1 vorgesehen. In der gezeigten Ausführungsform ist die Hecköffnung 47 über zwei Hecktüren 48 verschließbar.

In den Figuren 21 bis 23 ist eine auf einem Transportstuhl 5 sitzende Transportperson 13 in einer Transportposition in verschiedenen Ansichten gezeigt. Der Transportstuhl 5 ist auf einer Plattform 8 angeordnet, welcher - soweit im Folgenden nicht abweichend beschrieben - in seiner konstruktiven Gestaltung im Wesentlichen der vorstehend beschriebenen Plattform 8 entspricht.

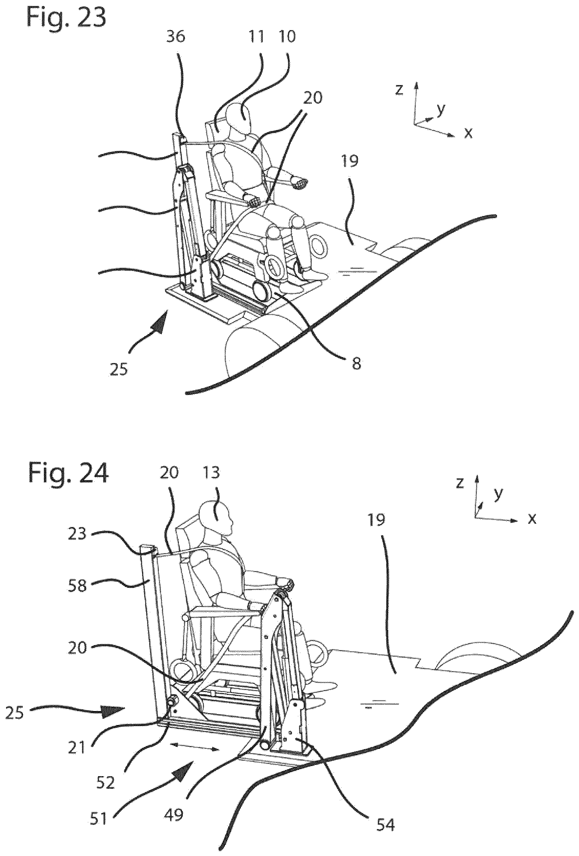

Wie in Figur 23 gut erkennbar ist, ist die Transportperson 13 mittels eines an der Plattform 8 befestigten Gurtes 20 angegurtet und damit gegenüber dem Transportstuhl 5 fixiert.

Die Plattform 8 ist funktional gekoppelt mit einer Horizontal-Verfahrvorrichtung 50 und lässt sich damit - ausgehend von der in den Figuren 21 bis 23 gezeigten Transportposition - in Fahrzeuglängsrichtung (x-Richtung) gemäß dem Doppelpfeil 50 verfahren.

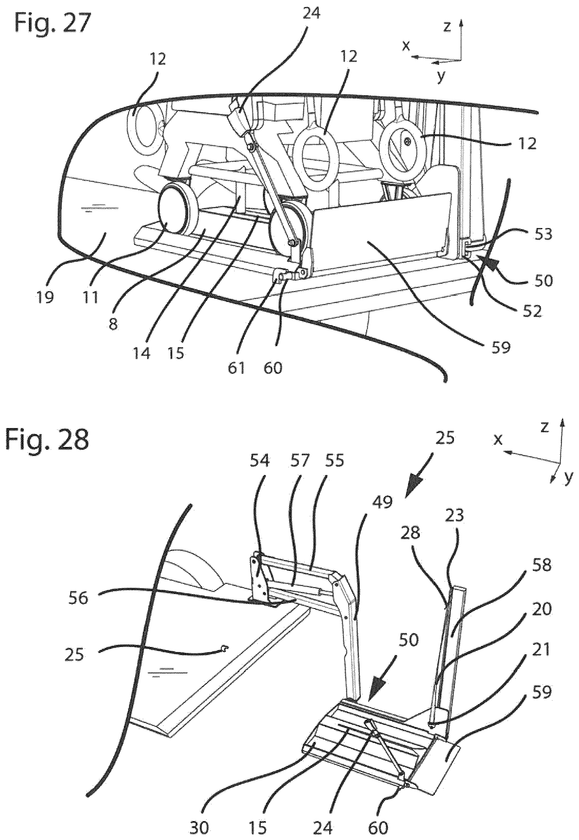

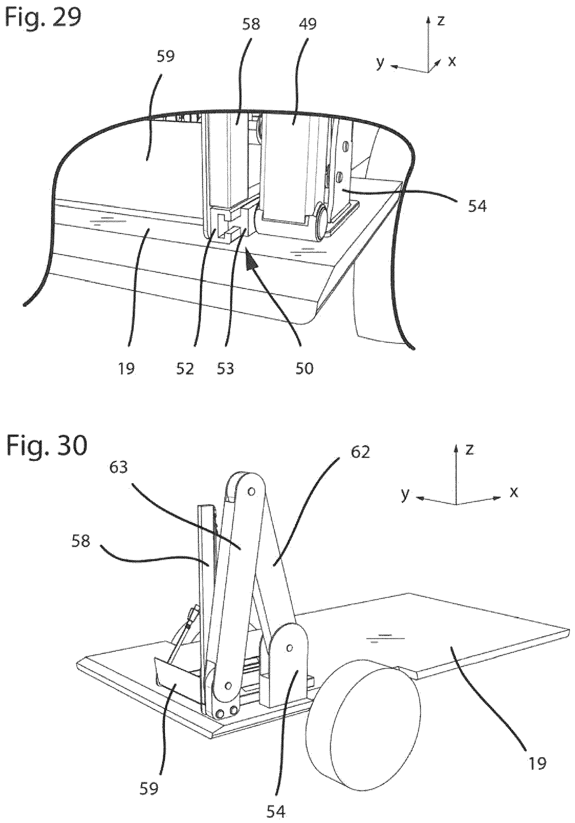

Wie in Figur 27 und Figur 29 gut erkennbar ist, ist die Horizontal-Verfahrvorrichtung 50 in der gezeigten Ausführungsform im Wesentlichen gebildet durch ein Profilelement 52, das Teil der Plattform 30 ist, und eine komplementär ausgebildete Profilschiene 53.

Das Profilelement 52 ist in der gezeigten Ausführungsform als c-förmiges Profil seitlich an der Plattform 30 vorgesehen.

Die Profilschiene 53 ist in der gezeigten Ausführungsform als fahrzeugfestes H-förmiges Profil ausgebildet und so dimensioniert, dass mit diesem eine formschlüssige Gleitverbindung zu dem Profilelement 52 herstellbar ist.

Der grundsätzlich konstruktive Aufbau des in den Figuren 21 bis 29 dargestellten Plattformlift-Systems 25 für eine Hecköffnung 47 ist in Figur 28 gut erkennbar. Dort ist die Plattform 8 ohne Transportstuhl 10 und ohne Transportperson 13 in der Außenposition außerhalb des Kraftfahrzeuges 1 auf dem Fahrbahnniveau gezeigt.

Das Plattformlift-System 25 gemäß dieser Ausführungsform ist im Wesentlichen gebildet durch einen fest mit dem Fahrzeugboden 19 verankerten Bodenanker 54, zwei Kragarme 55, 56 einer Parallelkinematik, die drehbar mit einer Plattform-Stütze 49 gekoppelt sind, und einem Schubelement 57.

Ebenfalls fest verbunden mit der Plattform 8 ist eine sich in vertikaler Richtung erstreckende Gurt-Stütze 58.

Da zum Auffahren eines Transportstuhls 5 auf die Plattform 8 der zweiten Ausführungsform aufgrund der konstruktiven Gestaltung mit einem sich in Hochrichtung erstreckenden Tragrahmen (nicht im Detail gezeigt) eine größere Höhe überwunden werden muss, ist an der Plattform 8 rückseitig eine Klappe 59 vorgesehen. Diese Klappe 59 ist verschwenkbar an der Plattform 8 befestigt und dient im heruntergeklappten Zustand, wie beispielsweise in Fig. 28 gezeigt, als Auffahrrampe. Im hochgeklappten Zustand, wie beispielsweise in Fig. 27 gezeigt, dient die Klappe 59 als Sicherung eines Transportstuhls 5 gegen unbeabsichtigtes Herunterrollen von der Plattform 8.

Wie in Figur 27 gut erkennbar ist, ist seitlich an der Plattform 8 ein in Querrichtung herausragender Bolzen 60 ausgebildet, der in der gezeigten Transportposition, mit einem fest mit dem Fahrzeugboden 19 verankerten Niederhalter 61 zusammenwirkt. Durch das Unterfahren des Niederhalters 61 wir die Plattform so in Fahrzeughochrichtung und in Fahrzeuglängsrichtung nach vorne formschlüssig fixiert. In Fahrzeugquerrichtung ist die Plattform 8 zusätzlich aufgrund des Zusammenwirkens zwischen Profilelement 52 und Profilschiene 53 formschlüssig fixiert.

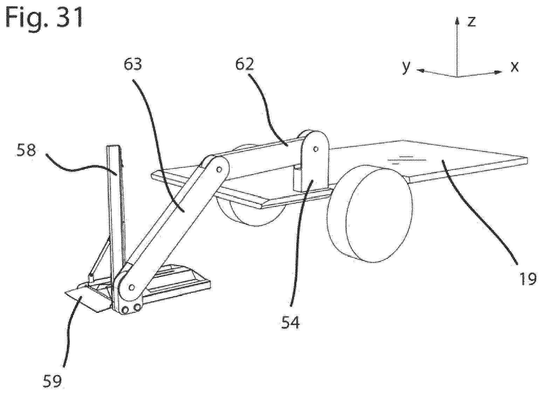

Die Figuren 30 und 31 zeigen eine weitere Ausführungsform, bei welcher eine Kinematik mit einem langen Bodenanker-Kragarm 62 und einem langen Plattform-Kragarm 63 vorgesehen sind, wobei der Bodenanker-Kragarm 62 schwenkbar an dem Bodenanker 54 angeordnet ist und der Plattform-Kragarm 63 als Verbindungsglied zwischen dem Bodenanker-Kragarm 62 und der Plattform vorgesehen ist und gegenüber beiden Elementen schwenkbar angeordnet. Bei dieser Ausführungsform sind die Horizontal-Verfahrvorrichtung 50 und die Hubeinheit 27 zu einer gemeinsamen Einheit verschmolzen. Dadurch wird die Plattform 8 gleichzeitig auf einer geführten Bahn in Hochrichtung und in Längsrichtung verfahren, um die Plattform zwischen der Transportposition und der Außenposition zu bewegen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Kraftfahrzeug
- 2: Transportraum
- 3: Trennwand
- 4: Seitentür
- 5: Transportstuhl
- 6: Hubelement
- 7: Tragelement
- 8: Plattform
- 9: Verbindungselement
- 10: Gelenk
- 11: Rad
- 12: Griff
- 13: Transportperson
- 14: Kupplungselement
- 15: Schlitz
- 16: Pilzkopf
- 17: Bolzenaufnahme
- 18: Dorn / Bolzen
- 19: Fahrzeugboden
- 20: Gurt
- 21: untere Gurt-Befestigung
- 22: Anschlag
- 23: obere Gurt-Umlenkung
- 24: Gurtschloss
- 25: Plattformlift-System
- 26: Fahrerkabine
- 27: Hubeinheit
- 28: Schlosszunge
- 29: Haltearm
- 30: Fahrrinne
- 31: Mittelsteg
- 32: Materiallasche
- 33: Gelenkaufnahme
- 34: Hubelement-Bolzen
- 35: Gelenkaufnahme-Drehachse
- 36: erste Bolzen-Aufnahme
- 37: Gelenkkörper
- 38: zweite Bolzen-Aufnahme
- 39: Plattform-Bolzen
- 40: vertikale Plattformdrehachse
- 41: Koppelstange
- 42: Koppelstangen-Hubelement-Drehachse
- 43: Koppelstangen-Plattform-Drehachse
- 44: Ausleger (des Hubelements)
- 45: Verfahrlinie
- 46: Pfeil
- 47: Hecköffnung
- 48: Hecktür
- 49: Plattform-Stütze
- 50: Horizontal-Verfahrvorrichtung
- 51: Doppelpfeil
- 52: Profilelement
- 53: Profilschiene
- 54: Bodenanker
- 55: Kragarm
- 56: Kragarm
- 57: Schubelement
- 58: Gurt-Stütze
- 59: Klappe
- 60: Bolzen
- 61: Niederhalter
- 62: Bodenanker-Kragarm
- 63: Plattform-Kragarm
- 64: Verriegelungselement

## Patentansprüche

1. Kraftfahrzeug (1) mit einem Plattformlift-System (25), das mindestens folgende Elemente aufweist: eine Plattform (8) für die Aufnahme eines Transportstuhls (5) mit einer darauf sitzenden Transportperson (13), eine Hubeinheit (27) zur Durchführung von vertikalen Relativbewegungen der Plattform (8) zwecks Anheben und Absenken der Plattform (8) und eine Horizontal-Verfahrvorrichtung (50) zur Durchführung von horizontalen Relativbewegungen zwischen der Plattform (8) und der Hubeinheit (27), wobei die Plattform (8) mittels der Hubeinheit (27) und/oder der Horizontal-Verfahrvorrichtung (50) zwischen einer Außenposition außerhalb des Kraftfahrzeuges (1) und einer Transportposition innerhalb des Kraftfahrzeuges (1) verfahrbar ist,
**dadurch gekennzeichnet,**
**dass** die Horizontal-Verfahrvorrichtung (50) und/oder die Hubeinheit (27) eine Zwangsführung aufweisen, um die Plattform (8) auf einer mindestens teilweise zwangsgeführten Bahn bewegen zu können, wobei die Zwangsführung durch ein Mehrfachgelenk (36, 37, 38) mit einer funktional verbundenen Koppelstange (41) und/oder eine Parallelkinematik (54, 55, 56, 57) gebildet ist.

2. Kraftfahrzeug (1) nach dem vorstehenden Anspruch, **dadurch gekennzeichnet, dass** das Plattformlift-System (25) einen Transportstuhl (5) umfasst und mindestens ein Fixierelement zur Fixierung des Transportstuhls (5) und/oder der Plattform (8) gegenüber dem Fahrzeugboden (19) vorgesehen ist, um die Plattform (8) und/oder den Transportstuhl (5) in der Transportposition relativ gegenüber dem Fahrzeugboden (19) zu fixieren.

3. Kraftfahrzeug (1) nach dem vorstehenden Anspruch, **dadurch gekennzeichnet, dass** die Hubeinheit (27) selbst als Fixierelement ausgebildet ist und/oder die Horizontal-Verfahrvorrichtung (50) als Fixierelement ausgebildet ist und/oder ein System aus mindestens einem Bolzen (18, 60) und einer damit korrespondierenden Bolzenaufnahme (17) oder einem damit korrespondierenden Niederhalter (61) als Fixierelement ausgebildet sind.

4. Kraftfahrzeug (1) nach einem der vorstehenden Ansprüche 2 oder 3, **dadurch gekennzeichnet, dass** an dem Transportstuhl (5) ein Führungsbolzen (18) ausgebildet ist und an der Plattform (8) und/oder in dem Fahrzeugboden (19) ein mit dem Führungsbolzen (18) korrespondierender Schlitz (15) ausgebildet ist, wobei durch Einführen und Bewegen des Führungsbolzens (18) in dem Schlitz (15) eine in Fahrzeughochrichtung formschlüssige Verbindung herstellbar ist.

5. Kraftfahrzeug (1) nach einem der vorstehenden Ansprüche 2 bis 4, dadurch **dadurch gekennzeichnet, dass** die Hubeinheit (27) und/oder die Horizontal-Verfahrvorrichtung (50) so ausgebildet ist, dass die Plattform (8) in eine Transportposition bringbar ist, in welcher der Transportstuhl (5) und/oder die Plattform (8) mindestens in eine Richtung formschlüssig und/oder kraftschlüssig gegenüber dem Fahrzeugboden (19) fixiert ist.

6. Kraftfahrzeug (1) nach einem der vorstehenden Ansprüche, **dadurch gekennzeichnet, dass** als Zwangsführung eine Schwenkanordnung vorgesehen ist.

7. Kraftfahrzeug (1) nach einem der vorstehenden Ansprüche, **dadurch gekennzeichnet, dass** die Hubeinheit (27) und/oder die Horizontal-Verfahreinheit an einer gemeinsamen Tragstruktur angeordnet sind.

8. Kraftfahrzeug (1) nach einem der vorstehenden Ansprüche, **dadurch gekennzeichnet, dass** an der Plattform (8) oder fahrzeugfest im Kraftfahrzeug (1) mindestens ein Gurt (20) und/oder mindestens ein Gurtschloss (24) zur Festlegung eines Gurtes (20) angeordnet ist.

9. Kraftfahrzeug (1) nach einem der vorstehenden Ansprüche, **dadurch gekennzeichnet, dass** die Plattform (8) fest verbunden ist mit einem sich in vertikaler Richtung erstreckenden Verbindungselement (9), welches mit der Hubeinheit (27) und/oder mit der Horizontal-Verfahrvorrichtung (50) verbunden ist.

10. Kraftfahrzeug (1) nach einem der vorstehenden Ansprüche 2 bis 9, **dadurch gekennzeichnet, dass** an der Plattform (8) ein erhöhter Mittelsteg (31) und/oder ein Schlitz (15) zum Zusammenwirken mit einem Kupplungselement (14) des Transportstuhls (5) ausgebildet ist.

11. Kraftfahrzeug (1) nach einem der vorstehenden Ansprüche 2 bis 10, dadurch **dadurch gekennzeichnet, dass** an der Plattform (8) als Führung für Räder des Transportstuhls (5) dienende Fahrrinnen (30) ausgebildet sind und/oder an der Plattform (8) eine klauenartige Struktur zum Zusammenwirken mit einem seitens des Fahrzeugbodens (19) installierten Funktionsstruktur zur Fixierung und/oder Führung der Plattform (8) gegenüber dem Fahrzeugboden (19) ausgebildet ist.

12. Kraftfahrzeug (1) nach einem der beiden vorstehenden Ansprüche, **dadurch gekennzeichnet, dass** die Hubeinheit (27) fahrzeugfest montiert ist und/oder an einer Trennwand (3) nahe einer Seitentür (4) oder an einer Seitenwand nahe einer rückseitigen Öffnung (47) des Kraftfahrzeuges (1) angeordnet ist.

13. Verfahren zum sicheren Ein- und Ausladen sowie zum Befördern von in einem Transportstuhl (5) sitzenden Transportpersonen (13) mit Hilfe eines Kraftfahrzeuges (1) nach einem der Ansprüche 1 bis 12, **dadurch gekennzeichnet, dass** zum Einladen und Befördern zunächst der Transportstuhl (5) mit der darauf sitzenden Transportperson (13) auf der Plattform (8) positioniert wird und die Plattform (8) dann von der Außenposition außerhalb des Kraftfahrzeuges (1) in eine Transportposition innerhalb des Kraftfahrzeuges (1) verfahren wird.

## Claims

1. A motor vehicle (1) with a platform lift system (25) comprising at least the following elements: a platform (8) for receiving a transport chair (5) with a passenger (13) seated thereon, a lifting unit (27) for performing vertical relative movements of the platform (8) for the purpose of raising and lowering the platform (8) and a horizontal movement device (50) for performing horizontal relative movements between the platform (8) and the lifting unit (27), wherein the platform (8) is movable by the lifting unit (27) and/or the horizontal movement device (50) between an external position outside the motor vehicle (1) and a transport position inside the motor vehicle (1), **characterised in that** the horizontal movement device (50) and/or the lifting unit (27) comprise a positive guide to be able to move the platform (8) along an at least partially positively guided path, wherein the positive guide is formed by a multi-joint (36, 37, 38) with a functionally connected coupling rod (41) and/or a parallel kinematics (54, 55, 56, 57).

2. The motor vehicle (1) according to the preceding claim, **characterised in that** the platform lift system (25) comprises a transport chair (5) and at least one fixing element for fixing the transport chair (5) and/or the platform (8) relative to the vehicle floor (19) is provided for fixing the platform (8) and/or the transport chair (5) in the transport position relative to the vehicle floor (19).

3. The motor vehicle (1) according to the preceding claim, **characterised in that** the lifting unit (27) itself is configured as a fixing element and/or the horizontal movement device (50) is configured as a fixing element and/or a system is formed of at least one pin (18, 60) and a corresponding bolt receptacle (17) or a corresponding holding-down device (61) as a fixing element.

4. The motor vehicle (1) according to any one of the preceding claims 2 or 3, **characterised in that** a dowel pin (18) is provided at the transport chair (5) and a slot (15) corresponding to the dowel pin (18) is provided at the platform (8) and/or in the vehicle floor (19), wherein a form-fit connection in the vertical direction of the vehicle can be made by inserting and moving the dowel pin (18) in the slot (15).

5. The motor vehicle (1) according to any one of the preceding claims 2 to 4, **characterised in that** the lifting unit (27) and/or the horizontal movement device (50) are configured such that the platform (8) can be brought into a transport position in which the transport chair (5) and/or the platform (8) are fixed in a form-fit and/or force-fit manner relative to the vehicle floor (19) in at least one direction.

6. The motor vehicle (1) according to any one of the preceding claims, **characterised in that** a swivel assembly is provided as a positive guide.

7. The motor vehicle (1) according to any one of the preceding claims, **characterised in that** the lifting unit (27) and/or the horizontal movement device are arranged on a common support structure.

8. The motor vehicle (1) according to any one of the preceding claims, **characterised in that** at least one belt (20) and/or at least one belt buckle (24) for fastening a belt (20) are arranged on the platform (8) or fixed to the vehicle within the motor vehicle (1).

9. The motor vehicle (1) according to any one of the preceding claims, **characterised in that** the platform (8) is firmly attached to a connecting element (9) extending in the vertical direction which is connected to the lifting unit (27) and/or the horizontal movement device (50).

10. The motor vehicle (1) according to any one of the preceding claims 2 to 9, **characterised in that** a raised central web (31) and/or a slot (15) for co-operating with a coupling element (14) of the transport chair (5) are formed on the platform (8).

11. The motor vehicle (1) according to any one of the preceding claims 2 to 10, **characterised in that** wheel channels (30) serving as a guide for wheels of the transport chair (5) are provided on the platform (8) and/or a claw-like structure for co-operating with a functional structure installed on the side of the vehicle floor (19) for fixing and/or guiding the platform (8) relative to the vehicle floor (19) are provided on the platform (8).

12. The motor vehicle (1) according to any one of the two preceding claims, **characterised in that** the lifting unit (27) is mounted fixed to the vehicle and/or arranged on a partition wall (3) adjacent to a side door (4) or on a lateral wall adjacent to a rear opening (47) of the motor vehicle (1).

13. A method for safely loading and unloading as well as transporting passengers (13) seated on a transport chair (5) by a motor vehicle (1) according to anyone of claims 1 to 12, **characterised in that** for loading and transporting, the transport chair (5) with the passenger (13) seated thereon is first positioned on the platform (8) and then the platform (8) is moved from the external position outside the motor vehicle (1) to a transport position inside the motor vehicle (1).

## Revendications

1. Véhicule automobile (1) avec un système de levage de plate-forme (25), qui présente au moins les éléments suivants : une plate-forme (8) destinée à recevoir un siège de transport (5) sur lequel est assise une personne à transporter (13), une unité de levage (27) pour effectuer des mouvements relatifs verticaux de la plate-forme (8) afin de soulever et d'abaisser la plate-forme (8) et un dispositif de déplacement horizontal (50) pour effectuer des mouvements relatifs horizontaux entre la plate-forme (8) et l'unité de levage (27), la plate-forme (8) pouvant être déplacée au moyen de l'unité de levage (27) et/ou du dispositif de déplacement horizontal (50) entre une position extérieure à l'extérieur du véhicule automobile (1) et une position de transport à l'intérieur du véhicule automobile (1), **caractérisé en ce que**
le dispositif de déplacement horizontal (50) et/ou l'unité de levage (27) présentent un guidage forcé pour pouvoir déplacer la plate-forme (8) sur une trajectoire au moins partiellement guidée de manière forcée, le guidage forcé étant formé par une articulation multiple (36, 37, 38) avec une barre de couplage (41) reliée fonctionnellement et/ou une cinématique parallèle (54, 55, 56, 57).

2. Véhicule automobile (1) selon la revendication précédente, **caractérisé en ce que** le système de levage de plate-forme (25) comprend un siège de transport (5) et au moins un élément de fixation est prévu pour fixer le siège de transport (5) et/ou la plate-forme (8) par rapport au plancher du véhicule (19), afin de fixer la plate-forme (8) et/ou le siège de transport (5) dans la position de transport par rapport au plancher du véhicule (19).

3. Véhicule automobile (1) selon la revendication précédente, **caractérisé en ce que** l'unité de levage (27) elle-même est réalisée sous forme d'élément de fixation et/ou le dispositif de déplacement horizontal (50) est réalisé sous forme d'élément de fixation et/ou un système composé d'au moins un boulon (18, 60) et d'un logement de boulon (17) correspondant ou d'un serre-flan (61) correspondant est réalisé sous forme d'élément de fixation.

4. Véhicule automobile (1) selon l'une quelconque des revendications 2 ou 3 précédentes, **caractérisé en ce qu'**un boulon de guidage (18) est réalisé sur le siège de transport (5) et une fente (15) correspondant au boulon de guidage (18) est réalisée sur la plate-forme (8) et/ou dans le plancher du véhicule (19), une liaison par complémentarité de forme dans la direction verticale du véhicule pouvant être établie par introduction et déplacement du boulon de guidage (18) dans la fente (15).

5. Véhicule automobile (1) selon l'une quelconque des revendications 2 à 4 précédentes, **caractérisé en ce que** l'unité de levage (27) et/ou le dispositif de déplacement horizontal (50) est réalisé de telle sorte que la plate-forme (8) peut être amenée dans une position de transport dans laquelle le siège de transport (5) et/ou la plate-forme (8) est fixé(e) par complémentarité de forme et/ou par adhérence au moins dans une direction par rapport au plancher du véhicule (19).

6. Véhicule automobile (1) selon l'une quelconque des revendications précédentes, **caractérisé en ce qu'**il est prévu en tant que guidage forcé un agencement de pivotement.

7. Véhicule automobile (1) selon l'une quelconque des revendications précédentes, **caractérisé en ce que** l'unité de levage (27) et/ou l'unité de déplacement horizontal sont agencées sur une structure de support commune.

8. Véhicule automobile (1) selon l'une quelconque des revendications précédentes, **caractérisé en ce qu'**au moins une ceinture (20) et/ou au moins une boucle de ceinture (24) pour fixer une ceinture (20) est agencée sur la plate-forme (8) ou de manière solidaire du véhicule dans le véhicule automobile (1).

9. Véhicule automobile (1) selon l'une quelconque des revendications précédentes, **caractérisé en ce que** la plate-forme (8) est solidaire d'un élément de liaison (9) s'étendant dans la direction verticale, qui est relié à l'unité de levage (27) et/ou au dispositif de déplacement horizontal (50).

10. Véhicule automobile (1) selon l'une quelconque des revendications 2 à 9 précédentes, **caractérisé en ce qu'**une nervure centrale surélevée (31) et/ou une fente (15) est réalisée sur la plate-forme (8) pour coopérer avec un élément d'accouplement (14) du siège de transport (5).

11. Véhicule automobile (1) selon l'une quelconque des revendications 2 à 10 précédentes, **caractérisé en ce que** des goulottes de déplacement (30) servant de guide pour les roues du siège de transport (5) sont réalisées sur la plate-forme (8) et/ou une structure de type griffe est réalisée sur la plate-forme (8) pour coopérer avec une structure fonctionnelle installée du côté du plancher du véhicule (19) pour fixer et/ou guider la plate-forme (8) par rapport au plancher du véhicule (19).

12. Véhicule automobile (1) selon l'une quelconque des deux revendications précédentes, **caractérisé en ce que** l'unité de levage (27) est montée de manière solidaire au véhicule et/ou est agencée sur une paroi de séparation (3) à proximité d'une porte latérale (4) ou sur une paroi latérale à proximité d'une ouverture arrière (47) du véhicule automobile (1).

13. Procédé pour charger et décharger en toute sécurité ainsi que pour transporter des personnes à transporter (13) assises sur un siège de transport (5) à l'aide d'un véhicule automobile (1) selon l'une quelconque des revendications 1 à 12, **caractérisé en ce que** pour le chargement et le transport, le siège de transport (5) avec la personne à transporter (13) assise dessus est d'abord positionné sur la plate-forme (8) et la plate-forme (8) est ensuite déplacée de la position extérieure à l'extérieur du véhicule automobile (1) dans une position de transport à l'intérieur du véhicule automobile (1).
